# EUROPEAN PATENT APPLICATION

(11) **EP 1 435 584 A1**
(43) Date of publication of application: **07.07.2004**
(21) Application number: 03000135.8
(22) Date of filing: 03.01.2003
(51) Int. Cl.: G06F 17/60

(54) **A system and method for sharing of information on a virtual platform**

(71) Applicant: CHATFITI ApS, 2100 Copenhagen O (DK)
(72) Inventor: Monberg, Christen, 2850 Naerum (DK)
(74) Representative: Larsson, Lena Eva-Karin

(57) **Abstract**

This invention relates to a system and method for sharing information on a virtual platform. In particular, this invention relates to a system and method for providing a plurality of terminals connected in a communication network access to a virtual platform for sharing information, which virtual platform utilises a database containing data in a structured format.

## Description

### Field of invention

This invention relates to a system and method for sharing information on a virtual platform. In particular, this invention relates to a system and method for providing a plurality of terminals connected in a communication network access to a virtual platform for sharing information, which virtual platform utilises a database containing data in a structured format.

### Background of invention

Today meetings between people may be physical or virtual in their nature. At physical meetings whiteboards or projectors are commonly used for presenting information and comments regarding the presented information is generally made orally, which may be recorded on tape or paper. At virtual meetings, such as video conferences, telephone meetings, chat rooms on the Internet, or file sharing or file distribution, information is generally presented in an off-line manner i.e. the information is forwarded by for example an e-mail containing an attached file and/or containing a reference to a web-site on the Internet.

The term "off-line" should in this context be construed as relating to the form of presentation and not per se to the time of the presentation i.e. the presentation may be received by the participants of a meeting prior to the meeting takes place and the presentation is separately run at any time by each participant.

Even though the virtual meetings have significantly reduced the costs of meetings in general, the facilities surrounding virtual meetings still need improvement in regards to providing the beneficial conditions of a physical meeting. For example, in case a participant of a physical meeting has some suggestions to a drawing being presented during the meeting, the participant may simply draw or write his comments on a piece of paper or on a whiteboard showing the drawing in an on-line manner.

The term "on-line" is in this context to be construed in regards to presenting information which is readily editable and/or record-able and not to be construed per se to the time of the presentation.

As described above the relevant prior art comprises the establishment and execution of chat rooms on the Internet. The chat rooms enable communication between a plurality of terminals connected in a communication network enabling transmission of messages containing text and/or graphics. However, the message cannot be stored or edited, and cannot contain objects such as files containing documents or images. In addition, the identities of the participants in a chat room are difficult to verify thus providing a possible breach of security.

A system for identifying data records in a two-dimensional database using a data structure with linked parameters in a search range is known from American patent no. US 5,551,024.

The system provides a data structure for nearly instantaneous identification of one or more data records in a database. The system utilises a search structure including two or more tables listing specific search parameters in a selected order, and listing information that correlates associated search parameters among the tables.

Further, a method for retrieving points that can be plotted in a predetermined area, where the locations of the points are indexed in an index that comprises regional data, is disclosed in International patent application no. WO 02/48908.

The disclosed system and method of US 5,551,024 and the disclosed method of WO 02/48908, which hereby are incorporated by reference in below specification, provide good capabilities for searching and locating data in a data structure in non-dynamic storage device such as a CD-ROM. However, the system and methods disclosed in the referenced US patent and International patent application do not provide a solution for searching in a dynamic data structure. The main reason is, that inserting new elements into the database is so time-consuming that these techniques are useless for an on-line editing application.

### Summary of the invention

An object of the present invention is therefore to provide a system and method for solving the problems introduced by the prior art technologies.

Thus the object of the present invention is to provide a system and method for establishing an executing virtual meetings during which information may be shared among participants in a readily readable and editable format. That is, provide means for improving "on-line" communication.

It is a further object of the present invention to provide a system and method for searching for and inserting data in a dynamic as well as non-dynamic data structure.

A particular advantage of the present invention is provision of a virtual platform in which connecting participants may concurrently read and/or write comments, which simultaneously may be seen by all or selected participants.

A particular feature of the present invention relates to the provision of a historic position associated to each data set in a data structure, which position enables an instantaneous determination of the chronological order of the data in the data structure in accordance with the data being inserted in the data structure.

The above objects, advantage and feature together with numerous other objects, advantages and features, which will become evident from below detailed description, is obtained according to a first aspect of the present invention by a system for sharing one or more presentation objects during a meeting session established between a plurality of clients connected in a communication network, and comprising:
(a) a server adapted to connect to said plurality of clients through said communication network, to verify identity of each of said plurality of clients, and to establish a meeting session by generating a virtual platform adapted to define a space for positioning of said one or more presentation objects and to provide an interface for a client of said plurality of clients to said space;
(b) a database connecting to said server and comprising an object table for storing said one or more presentation objects in chronological storing order and an index table for storing position data in said space for each of said one or more presentation objects in said object table; and wherein
said virtual platform is adapted to enable said client to generate a full view of said space on said display and generate a detailed view of said space on said display and/or enable said client to append an object to said object table of said database and/or to enable said client to read and/or edit any object in said object table of said database.

The full view may comprise a schematic view of the entire space showing an operator of the client the content of the space. For example the full view may comprise a bitmap file in which the active areas of the space are expressed as symbols. Thus the entire space is not forwarded to the plurality of clients in a complete version but rather as file accentuating the areas of the space in which a meeting session is under way.

The detailed view contrary to the full view may comprise a one to one copy of the space in a selected area. The detailed view may be a direct copy of a selected area of the space, which area is defined by the client to for example a specific number of pixels in horizontal and vertical directions of the space. The detailed view may then be forwarded from the server to the client in entirety.

The combination of enabling the client to generate a full view showing the entire space in a summery form and enabling the client to generate a detailed view of part of the space, which detailed view comprises every element of that part of the space, provides a unique and powerful tool for easily forwarding of information from the server to the client or to the plurality of clients. The bandwidth requirements for the system are reduced thereby increasing efficiency of and speeding up the running of virtual meetings.

Due to the fact of the reduction of required bandwidth an operator of the client will not feel any delays during or prior to participating in a meeting session since the operator will sense the limitation of the system to be the display associated with the client and not due to limited bandwidth. When panning in a detailed view only the required new objects are forwarded from the server to the client.

The position data according to the first aspect of the present invention may comprise a plurality of coordinates such as a two dimensional Cartesian coordinates or circular coordinates or three dimensional Cartesian, spherical or cylindrical coordinates. The index table may be adapted to be sorted in accordance with a first set of the plurality of coordinates. The first set of the plurality of coordinates may comprise an x-coordinate for partly defining position of each the one or more objects in the space. A second set of the plurality of coordinates may comprise an y-coordinate for further defining position of each of the one or more presentation objects in the space.

The one or more presentation objects according to the first aspect of the present invention may be stored in the object table in a vector format. By utilising the vector format the content of the virtual platform, which easily may be millions of objects, is not physically transferred from the server to the plurality of clients thereby reducing required bandwidth of the communication network.

Further, the one or more presentation objects may comprise a file such as a data file, a text file, a graphics file, or any combination thereof. The file may comprise a text, a slideshow, a graphical figure, an image, a series of images, a video, a series of videos, an audio recording, a series of audio recordings, or any combination thereof. Obviously, the objects may comprise any form of file type known in the present state of the art technologies and thus comprise file types specific for certain software modules and file types editable from a wide variety of software modules.

The client according to the first aspect of the present invention may comprise a communication terminal such as a cellular or mobile phone, personal digital assistant, a computer, set-top box, television set, or any combination thereof. In fact the communication network may comprise a wired or wireless radio communication network telecommunication network, a television network, a power-line network, a computer network, or any combination thereof. The wired or wireless computer network may comprise a wired or wireless local area network, a metropolitan area network, a wide area network, an inter-network, such as the Internet, or any combination thereof. Further, the wired or wireless television network may comprise a satellite television network, a radio-frequency television network, a cable television network, or any combination thereof.

Further, the client may comprise a display and the client may be adapted to navigate in the space by generating a new detailed view to be communicated to the display.

Further, the client may be adapted to edit an object in the detailed view by drawing a stroke with a pen, typing text, pinning-up a note, a document or any other type of file, mounting a picture, or changing position of the object in the detailed view. The client may in fact utilise any operating system and any software module for manipulating the data in the objects. The client may present the manipulated objects instantaneously to the participating clients in the meeting session or may in fact select particular clients to receive manipulated objects first.

Further, the client may be adapted to during a meeting session to transmit and receive an email to and from any client of the plurality of clients participating in the meeting session. For instance, as described above the client has forwarded a manipulated object to particular clients and forwards an email to these clients initiating a discussion, which may or may not be irrelevant to the plurality of clients.

The server according to the first aspect of the present invention may further be adapted to establish a vocal network between the plurality of clients, such vocal network as an Internet protocol telephone network, a cellular telephone network, a wired telephone network, or any combination thereof. The server may further be adapted to establish a video conference between the plurality of clients. In order to achieve a virtual meeting session covering general aspects of a meeting the vocal and visual data may be forwarded to the plurality of clients. Hence the present system significantly improves the virtual meeting facilities.

The database according to the first aspect of the present invention may further comprise a list of pointers to the one or more objects in the object table. The list may be adapted to be sorted by in the database in chronological order. The list is easily sorted and may be generated in accordance with a clients particular detailed view of the space. That is, if a client wishes to detailed view a limited area of the space the list is generated and sorted so as to reduce the amount of data to be transferred to the client from the server.

Further, the database may comprise a storage unit such as system memory or such as a hard-disk, a floppy disk, a CD-ROM disk, a DVD-disk, magneto-optical disk, or any combination thereof. In face the database may be configured on any type of memory device available to the person skilled in the art.

The above objects, advantages and features together with numerous other objects, advantages and features, which will become evident from below detailed description, is obtained according to a second aspect of the present invention by a method for sharing one or more presentation objects during a meeting session established between a plurality of clients connected in a communication network, and comprising:
(a) connecting said plurality of clients through said communication network to a server;
(b) verifying identity of each of said plurality of clients;
(c) establishing a meeting session by generating a virtual platform defining a space for positioning of said one or more presentation objects;
(d) providing an interface for a client of said plurality of clients to said space;
(e) connecting a database to said server;
(f) establishing an object table for storing said one or more presentation objects in chronological storing order;
(g) establishing an index table for storing position data for each of said one or more presentation objects in said object table;
(h) enabling said client to generate a full view of said space;
(i) enabling said client to generate a detailed view of said space; and
(j) enabling said client to append an object to said object table of said database and/or enabling said client to read and/or edit any object in said object table of said database.

The method according to second aspect of the present invention may further comprise sorting the index table in accordance with a first set of the plurality of coordinates.

The method according to second aspect of the present invention may comprise enabling the client to navigate in the space and to generate the detailed view of the space on a display associated with the client.

The method according to second aspect of the present invention may comprise enabling the client to edit an object in the detailed view by drawing a stroke with a pen, typing text, pinning-up a note, a document or any other type of file, mounting a picture, or changing position of the object in the view.

The method according to second aspect of the present invention may comprise establishing a vocal network between the plurality of clients, such vocal network as an Internet protocol telephone network, a cellular telephone network, a wired telephone network, or any combination thereof. The method may further comprise establishing a video conference between the plurality of clients. As described above with reference to the system according to the first aspect of the present invention the virtual meeting facilities are significantly improved by this method.

Further, the method may comprise enabling the client to, during a meeting session, to transmit and receive an email to and from any client of the plurality of clients participating in the meeting session. This provides a powerful tool for the clients to during a meeting revert specific questions to specific clients in the plurality of clients relating to matters not necessarily relevant for all participants of the meeting.

The method according to second aspect of the present invention may comprise generating a list of pointers to the one or more objects in the object table and sorting the list in chronological order.

The full view according to second aspect of the present invention may comprise a bitmap image of the contents of said space to be forwarded to said client from said server.

Further, the method may comprise updating the bitmap image when the client inserts an object in the object table. By storing in parallel on the server a bitmap image the contents of the space is securely recorded and may be regenerated by the clients at any time. The method may comprise regenerating the object on the bitmap image by means of code comprised in the object. The code in the object may be readable by the client or may in fact be executable by the client so that exchanging of graphical data is limited.

The method according to second aspect of the present invention may comprise transmitting the bitmap image to the plurality of clients during establishing the meeting session. The bitmap image is initially transmitted to the clients during initialisation of the meeting and changes to the bitmap image done hereafter may be forwarded in code format.

The method according to second aspect of the present invention may comprise storing a copy of the bitmap image in memory associated with each of the plurality of clients for the duration of the meeting session. Obviously, the bitmap image may be stored in any type of versatile and non-versatile memory units available to the person skilled in the art.

The method according to second aspect of the present invention may comprise inserting position data in the index table in accordance with an associated object's position in the space. In fact the index table may comprises a plurality of elements associated with each of the one or more presentation objects, which elements may comprise the position data and any other data relevant for the particular object e.g. object type.

The method according to second aspect of the present invention may comprise enabling the client to request from to the server a copy of objects of the one or more objects in the full view. When the client generates a specific detailed view in the space the client in fact request a copy of the objects located in this specific detailed view of the space. The objects in the detailed view may be in partly or fully visible in the detailed view. For instance the specified detailed view may have borders cutting parts of the objects on the borders away.

The method according to second aspect of the present invention may comprise locating the objects in the detailed and/or full view by identifying associated position data in the index table having x-coordinates within the detailed and/or full view, identifying which of the associated position data in the index table have y-coordinates within the view, and generating a list of pointers to the objects from the associated position data.

The method according to second aspect of the present invention may incorporate any features of the system according to first aspect of the present invention.

The above objects, advantages and features together with numerous other objects, advantages and features, which will become evident from below detailed description, is obtained according to a third aspect of the present invention by a virtual platform for sharing one or more presentation objects during a meeting session established between a plurality of clients connected in a communication network, and comprising a space for positioning of the one or more presentation objects so as to provide an interface for a client of the plurality of clients to the one or more presentation objects, and wherein the virtual platform is operable by a server adapted to connect to the plurality of clients through the communication network, to verify identity of each of the plurality of clients, and adapted to establish a meeting session between the plurality of clients, and wherein the virtual platform is adapted to utilise a database connecting to the server and comprising an object table for storing the one or more presentation objects in chronological storing order and an index table for storing position data in the space for each of the one or more presentation objects in the object table, and wherein the virtual platform is adapted to enable the client to generate a full view of said space and to generate a detailed view of said space and/or enable the client to append an object to the object table of the database and/or to enable the client to read and/or edit any object in the object table of the database.

The virtual platform according to third aspect of the present invention may incorporate any features of the system according to the first aspect of the present invention and any features of the method according to the second aspect of the present invention.

The above objects, advantage and feature together with numerous other objects, advantages and features, which will become evident from below detailed description, is obtained according to a fourth aspect of the present invention by a computer program comprising code adapted to perform the following steps when said program is run on a server and client system:
(a) connecting said server to a plurality of clients through a communication network;
(b) verifying identity of each of said plurality of clients;
(c) establishing a meeting session by generating a virtual platform defining a space for positioning of one or more presentation objects;
(d) providing an interface for a client of said plurality of clients to said space;
(e) connecting a database to said server;
(f) establishing an object table for storing said one or more presentation objects in chronological storing order in a memory connected to said server;
(g) establishing an index table for storing position data in said memory for each of said one or more presentation objects in said object table;
(h) enabling said client to generate a full view of said space;
(i) enabling said client to generate a detailed view of said space; and
(j) enabling said client to append an object to said object table of said database and/or enabling said client to read and/or edit any object in said object table of said database.
   The computer program according to the fourth aspect of the present invention may incorporate any features of the system according to the first aspect of the present invention, any features of the method according to the second aspect of the present invention, and any features of the virtual platform according to the third aspect of the present invention.

### Brief description of the drawings

The above, as well as additional objects, features and advantages of the present invention, will be better understood through the following illustrative and non-limiting detailed description of preferred embodiments of the present invention, with reference to the appended drawing, wherein:
figure 1, shows a schematic view of a system according to a first embodiment of the present invention,

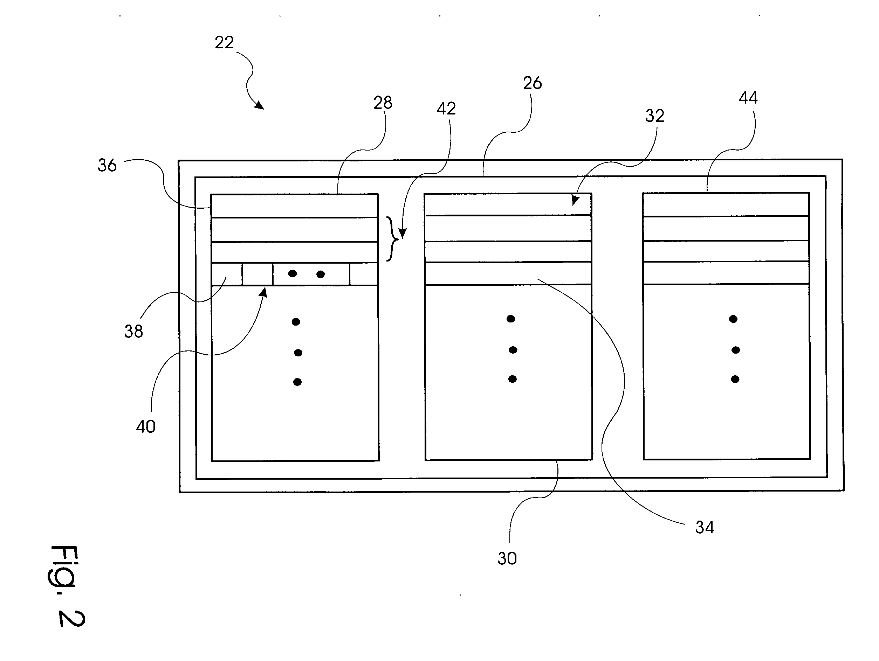

figure 2, shows a schematic view of a database comprised in the system according to the first embodiment of the present invention, and
figure 3, shows a flow chart of a method according to a second embodiment of the present invention.

### Detailed description of preferred embodiments

In the following description of the various embodiments, reference is made to the accompanying drawings which form a part hereof, and in which is shown by way of illustration various embodiments in which the invention may be practiced.
It is to be understood that other embodiments may be utilized and structural and functional modifications may be made without departing from the scope of the present invention.

The present invention may be divided into two parts, namely the User Model, and the System Model. Nearly any system with user interaction has a User Model and a System Model. The User Model describes what is visible to the user (handles and visible indicators), and what the system apparently does when it is operated. In other words, the user's perspective of the system. For example, in a car the user model comprises the steering wheel, pedals, and all other handles. In addition the user model of the car comprises the ability to transport a load on a road, the mapping between handles, and the movement of the car (turn the steering wheel clockwise, and the car turns to the right).

Sometimes a user model has to use metaphors, especially when the system is more or less non-physical. For example, a program running on a personal computer shows pictures of push-buttons.

The user can simulate a push on the button by clicking on it with the mouse. When clicked, the button changes the shadows around the edges so as to create an illusion of being depressed. The reason for choosing the button as an element of the graphical user interface (GUI) definition for systems, such as the Microsoft Windows or the Mac operating system, is that it resembles something that the user knows how to operate in the physical world.

The System Model is what the system actually consists of. In the case of a car, there is an engine, comprising thousands of parts and components, which the user of the car is unaware of, and in fact does not need to know anything about.

The System Model "knows" about the User Model, and works as an intermediate "translator" between the user and the substance of the system. For example, in an electronic telephone directory the user model may be the image of a physical directory on paper. The actual directory is of course a disk file comprising a database. The System Model is the program software that "knows" how the database is organized, and is capable of translating user inquiries into queries to the database, and is able to present the results in a user-comprehensible form.

So, in a simplified form one may say that the User Model is what the system looks like, and the System Model is what it actually comprises.

As described above the present invention relates to both a user and system model, which will be described below.

### The System Model.

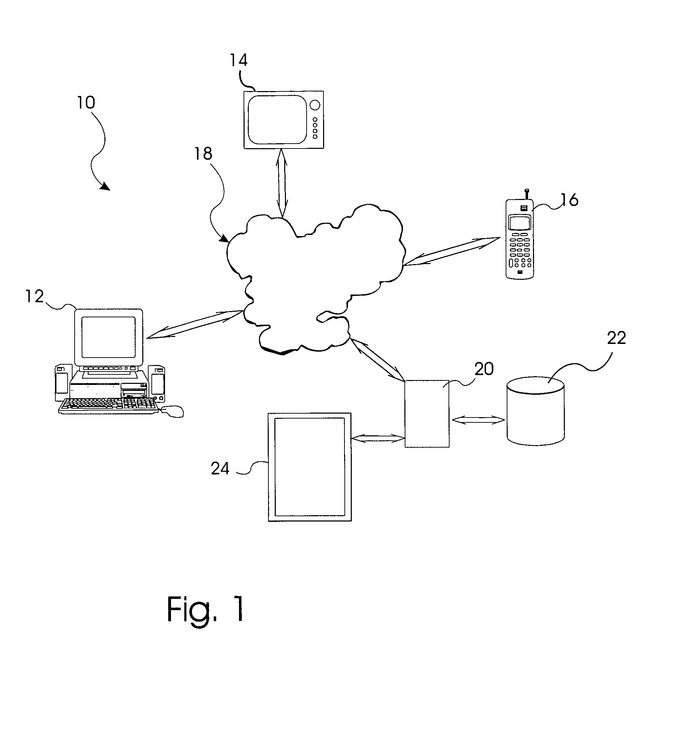

Figure 1, shows a system according to a first embodiment of the present invention and designated in entirety by reference numeral 10. The system 10 comprises a plurality of clients 12, 14, 16 communicating both on-line and off-line via a communication network 18 with one another and with a server 20. The plurality of clients may comprise a mobile or cellular phone, a personal digital assistant (PDA), a desk- or laptop computer, a set-top box, a television, or any combination thereof.

The communication network 18 comprises a computer network such as a wired or wireless local area network, metropolitan area network, wide area network or inter-network (e.g. the Internet), a telecommunication network such as a wired or wireless telephone network (e.g. GSM), a power line network, a television network such as a cable television net, satellite television net or a terrestrial television net, or any combination thereof.

The server 20 comprises a database 22 for storing data shared by the plurality of clients 12, 14, 16. The server 20 further comprises a virtual platform 24 for presenting data from the database 22. The virtual platform 24 is an interface for sharing data between the plurality of clients 12, 14, 16 connected in the communication network, and enables the clients 12, 14, 16 to read, write and edit data concurrently.

The data in the database 22 comprises drawings, pictures, video sequences, text, presentation shows, or any combination thereof.

The content of the virtual platform 24, which easily may be millions of objects, is not physically transferred from the server 20 to any of the clients 12, 14, 16. This is accomplished by storing the content of the virtual platform 24 in the database 22 as vector based graphics instead of as graphical bitmaps.

In addition to data to be shared by the clients 12, 14, 16, the database 22 comprises information regarding changes made to the content of the virtual platform 24. A change (e.g. a paint stroke) performed by any of the clients 12, 14, 16 using an editing tool on the data on the virtual platform 24 generates a record in the database 22.

The record comprises code required to re-create the change on a display associated with the clients 12, 14, 16, and comprises position of the change in the virtual platform 24, editing parameter (e.g. paint colour), client identity, time of change, and information, which is specific for the chosen editing tool.

Parallel to the database 22, the server 20 stores a bitmap image comprising a zoomed-out view of the contents of the virtual platform 24. This bitmap image is updated whenever a client 12, 14, and/or 16 creates an object. Any object (paint stroke, picture, etc) must contain the ability to regenerate itself on the zoomed-out bitmap. For instance, a line of text will paint itself as a line of single-pixel dots.

The system 10 enables the plurality of clients 12, 14, 16 to generate and attend communication sessions utilising the virtual platform 24 by logging on to the server 20 and identifying themselves.

When a client such as any of the plurality of clients 12, 14, 16 initiates a session and logs in, the server 20 sends the zoomed-out bitmap to the client. The client stores a copy of the bitmap for the duration of the session, and as it receives copies of all objects associated with the particular session, it can maintain the bitmap locally, for immediate display when the user zooms out.

This means, that the bitmap only needs to be transferred to the client once. The bitmap has a size that corresponds to the maximum size of a client view-port, e.g. 1000 by 1000 pixels. A view-port in this context is to be construed as an area of the virtual platform 24 to be viewed by the client.

The bitmap is compressed prior to transferring to a client using well-known techniques, such as JPEG or PNG. The used technique depends on the capability of the particular client's operating system.

In order to guarantee the speed of the system 10, when the client zooms in on the virtual platform 24, only the objects in the database 22 located in the zoomed in section of the virtual platform 24 is transferred.

For example, the view-port of a general computer monitor can be up to 40 by 40 cm, equalling 0,16 square metres. If the full virtual platform 24 is 400 square metres the general computer monitor, only requires 0.04% of all objects to be transferred to the client when zooming in (provided the objects are distributed evenly across the virtual platform 24). In practical use, this assures that even a low-bandwidth connection such as a 9.600 bits/sec GSM-Data connection is sufficient for the client to experience virtually no delay when zooming and navigating the virtual platform 24.

Of course, the delay depends on the nature of objects; a picture object, for instance, does require all the bytes in the picture image file to be transferred.

Several techniques exist to enable fast searching in two-dimensional databases. However, none of these techniques can be used in this context, because the system 10 has two speed objectives, that are somewhat conflicting. Firstly, the system 10 must enable a client to insert a new object into the database 22 with minimum calculation overhead, and secondly, the system 10 must enable a client to extract all objects belonging to a given rectangle of the virtual platform 24 without having to search through the whole database 22.

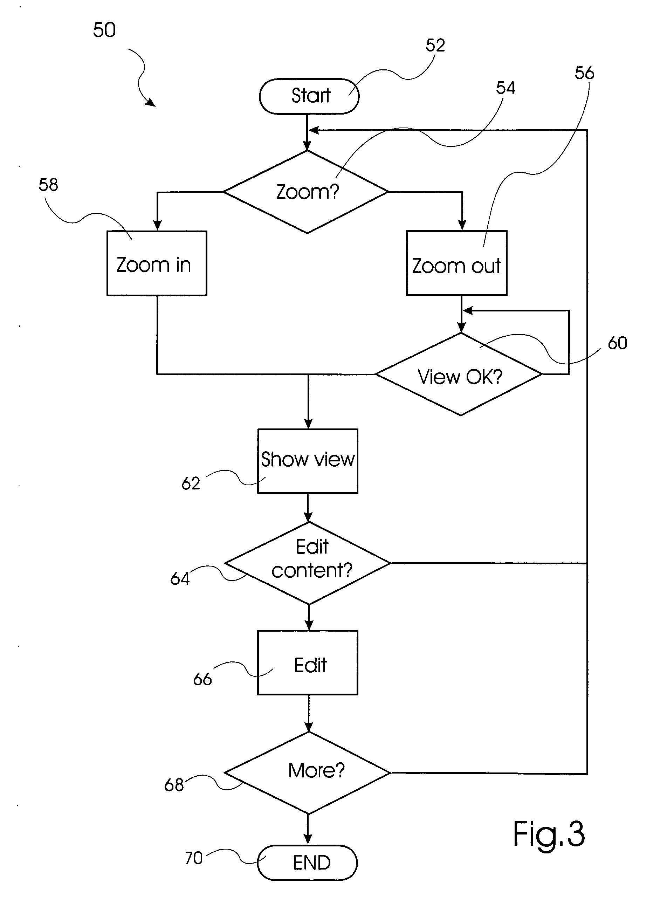

The database 22, as shown in figure 3, comprises two tables both of which may reside in a memory 26 such as system memory (random access memory) or hard-disk, floppy disk, CD-ROM disk, DVD-disk, magneto-optical disk, or any combination thereof.

The two tables are called index file 28 and object file 30. The object file 30 comprises the actual objects 32, in chronological order. Inserting a new object 34, is achieved by adding the object 34 to the end of the object file 30. Consequently, the object file 30 has elements of varying byte length.

The index file 28, however, has elements of fixed length, thus making it easily traversable. The index file 28 comprises a plurality of elements 36, each being associated with one object of the actual objects 32 in the object file 30, and each element, such as element designated by 38, comprises a plurality of fields 40 including information such as a pointer to the position of the associated object in the object file 30, x and y coordinates of the associated object on the virtual platform 24, and some optional information about the object.

The index file 28 is not sorted chronologically, rather it is sorted following one of the location coordinates(for example, the x-coordinate). By organizing data this way ensures a good compromise between fast object insertion and fast object retrieval.

As described above the insertion of an object is done by appending the object to the object file 30, and then inserting a new element in the right position in the x-sorted index file 28. This is achieved by using binary search, which is extremely fast and virtually independent of the number of objects in the object file 30.

For all practical purposes, the required time to perform a binary search can be considered zero. After the relevant position is identified in the index file 28 in accordance with the x-coordinate of the location of the object in the virtual platform 24, the new element is inserted by moving all subsequent elements so as to create space for the new element.

The most common object retrieval task is encountered when a client zooms in on a section of the virtual platform 24. The client sends a request to the server 20 ordering a copy of all objects whose boundaries intersects with the section of the virtual platform 24. To locate these objects, the system 10 firstly identifies the range of elements 42 in the index file 28 having x-values within the section. This corresponds to a column of the virtual platform 24. Within the range of these elements 42, the task is now to find all objects having a y-coordinate within the section. As the elements are not y-sorted, all the elements in the range of elements 42 have to be examined. Still, this is done without reading the object file 30. During this examination, a list 44 of pointers to objects in the object file 30 is built. This list 44 is sorted in chronological order.

As the object file 30 is chronological, it is enough to sort the list 44 so that pointers to the objects having a y-coordinate within the section in the object file 32 are in ascending order. Each time a new pointer is inserted into the list 44, its position in the list 44 is determined using binary search.

After the list 44 is finished, the referenced objects can be retrieved from the object file 30 and sent to the requesting client.

The speed of this requesting operation is dependent on the number of objects in the database 22. However, the only operation that is linearly dependent on the number, is the traversing through the range of elements 42 to find the elements having y-coordinates within the section. But, the larger the virtual platform 24, the smaller the percentage of the total elements needs to be examined as the search time is proportional to the square root of the number of elements. All other operations rely on binary search, which is log2 dependant on the number of elements.

### The User Model:

The size of the virtual platform 24 is determined during creation, but the size is for all practical purposes unlimited. A realistic size of virtual platform 24 could be 20 by 20 metres, equalling 400 square metres, but it could also be the size of a whole country, for mapping-applications.

Using a client program, an operator of a client terminal can look at the virtual platform 24 in two different views: Zoom-out, and Zoom-in. In Zoom-out view, the whole virtual platform 24 is visible on a display associated with the client terminal, in a scale that is the width of the virtual platform 24 divided by the width of the display. The operator may generate a general view of all objects on the virtual platform 24, and may select a viewing position, using a pointing device or keys. The viewing positions of all other on-line clients are also visible.

After choosing a viewing position, the operator may change the view to Zoom-in. In Zoom-in view the operator sees a section of the virtual platform 24 that fits the size of the display, in 1:1 scale. In addition to the navigation controls, a number of tools enable the operator to make various actions to change the appearance of the virtual platform 24. For example actions such as drawing strokes with pens, typing text, pinning-up notes, documents or any other type of file, mounting pictures, or changing the location of existing objects. The operator may change the "ink" used for painting; not only the colour, but also the transparency, and the duration of ink can be chosen. The term "duration" in this context is to be construed as paint strokes and typed characters will disappear after a given amount of time. If more than one operator is logged on to the virtual platform 24, all changes are immediately visible to all operators of connecting clients attending the session.

Depending on the actual client program implementation, the operator comprises several secondary tools, including saving objects on a client's local storage medium, opening files, etc.

All items and objects on the virtual platform 24 are persistent: they don't go away (unless painted with 'finite-duration ink' as mentioned above) when operators log-off, and when operators return after a period of time, the virtual platform 24 is still intact and can contain items created by other operators in the meantime. This means, that operators do not have to be logged on to the virtual platform 24 concurrently to be able to communicate.

Figure 3, shows a flow chart for a method according to a second embodiment of the present invention, which method may be incorporated in the system 10 as a user model, and which is designated in entirety by reference numeral 50.

The size of the virtual platform 24 is determined during a start level 52, during which level communication protocols are determined and further the attendants to a session are verified and logged in.

The method 50 enables during a zoom level 54 an operator to select between two different modes: a zoom-out mode accomplished by a zoom-out level 56, and a zoom-in mode accomplished by a zoom-in level 58.

The zoom-out level 56 provides a full view of the virtual platform 24 and enables the operator to generate a general view of all objects on the virtual platform 24. During a first view level 60 the method 50 enables the operator to select a viewing position, using a pointing device or keys.

After choosing a viewing position, the viewing position is displayed for the operator during a show view level 62. Subsequently, the method 50 enables the operator to select between the zoom modes in the zoom level 54.

During the zoom-in level 58 the method 50 enables the operator to define a desired section of the virtual platform 24 and during the show view level 62 to see that section of the virtual platform 24.

The method 50 further during a edit content? level 64 to enables the operator to select an editing level 66 during which editing level 66 the method 50 enables the operator to make various actions to change the appearance of the virtual platform 24. For example actions such as drawing strokes with pens, typing text, pinning-up notes, documents or any other type of file, mounting pictures, or changing the location of existing objects. The operator may change the "ink" used for painting; not only the colour, but also the transparency, and the duration of ink can be chosen. The term "duration" in this context is to be construed as paint strokes and typed characters will disappear after a given amount of time. If more than one operator is logged on to the virtual platform 24, all changes are immediately visible to all operators of connecting clients attending the session.

In addition, the editing level 66 further enables the operator to save objects on a client's local storage medium, opening files, etc.

Finally, the method 50 enables the operator to choose between continuing or concluding the session during a More? level 68.

If the operator chooses to conclude participation in the session the method 50 enters an end level during, which the virtual platform 24 is reset and saving of data associated with the session are saved. The data may comprise status data, participation data, object data, or any combination thereof.

## Claims

1. A system for sharing one or more presentation objects during a meeting session established between a plurality of clients connected in a communication network, and comprising:
(a) a server adapted to connect to said plurality of clients through said communication network, to verify identity of each of said plurality of clients, and to establish a meeting session by generating a virtual platform adapted to define a space for positioning of said one or more presentation objects and to provide an interface for a client of said plurality of clients to said space;
(b) a database connecting to said server and comprising an object table for storing said one or more presentation objects in chronological storing order and an index table for storing position data in said space for each of said one or more presentation objects in said object table; and wherein
said virtual platform is adapted to enable said client to generate a full view of said space forwarded to said client by said server and generate a detailed view of said space forwarded to said client by said server and/or enable said client to append an object to said object table of said database and/or to enable said client to read and/or edit any object in said object table of said database.

2. A system according to claim 1, wherein said index table is adapted to be sorted in accordance with a first set of a plurality of coordinates of said position data.

3. A system according to claim 2, wherein said first set of said plurality of coordinates comprises an x-coordinate for each said one or more objects in said space.

4. A system according to any of claims 1 to 3, wherein said one or more presentation objects are stored in said object table in a vector format.

5. A system according to any of claims 1 to 4, wherein said client comprises a display and wherein said client is adapted to navigate in said space by generating a new detailed view to be communicated to said display.

6. A system according to any of claims 1 to 5, wherein said server further is adapted to establish a vocal network between said plurality of clients, such vocal network as an Internet protocol telephone network, a cellular telephone network, a wired telephone network, or any combination thereof and/or wherein said server further is adapted to establish a video conference between said plurality of clients.

7. A method for sharing one or more presentation objects during a meeting session established between a plurality of clients connected in a communication network, and comprising:
(a) connecting said plurality of clients through said communication network to a server;
(b) verifying identity of each of said plurality of clients;
(c) establishing a meeting session by generating a virtual platform defining a space for positioning of said one or more presentation objects;
(d) providing an interface for a client of said plurality of clients to said space;
(e) connecting a database to said server;
(f) establishing an object table for storing said one or more presentation objects in chronological storing order;
(g) establishing an index table for storing position data for each of said one or more presentation objects in said object table;
(h) enabling said client to generate a full view of said space;
(i) enabling said client to generate a detailed view of said space; and
(j) enabling said client to append an object to said object table of said database and/or enabling said client to read and/or edit any object in said object table of said database.

8. A method according to claim 7, wherein said full view comprises a bitmap image of the contents of said space to be forwarded to said client from said server.

9. A method according to claim 8 further comprises regenerating an object in said bitmap image by means of code comprised in said object and/or further comprises transmitting said bitmap image to said plurality of clients during establishing said meeting session.

10. A method according to any of claims 7 to 9 further comprises locating an object in a view defined by said client by identifying associated position data in said index table having x-coordinates within said view, identifying which of said associated position data in said index table have y-coordinates within said view, and generating a list of pointers to said objects from said associated position data.

11. A virtual platform for sharing one or more presentation objects during a meeting session established between a plurality of clients connected in a communication network, and comprising a space for positioning of said one or more presentation objects so as to provide an interface for a client of said plurality of clients to said one or more presentation objects, and wherein said virtual platform is operable by a server adapted to connect to said plurality of clients through said communication network, to verify identity of each of said plurality of clients, and adapted to establish a meeting session between said plurality of clients, and wherein said virtual platform is adapted to utilise a database connecting to said server and comprising an object table for storing said one or more presentation objects in chronological storing order and an index table for storing position data in said space for each of said one or more presentation objects in said object table, and wherein said virtual platform is adapted to enable said client to generate a full view of said space and to generate a detailed view of said space and/or enable said client to append an object to said object table of said database and/or to enable said client to read and/or edit any object in said object table of said database.

12. A computer program comprising code adapted to perform the following steps when said program is run on a server and client system:
(a) connecting said server to a plurality of clients through a communication network;
(b) verifying identity of each of said plurality of clients;
(c) establishing a meeting session by generating a virtual platform defining a space for positioning of one or more presentation objects;
(d) providing an interface for a client of said plurality of clients to said space;
(e) connecting a database to said server;
(f) establishing an object table for storing said one or more presentation objects in chronological storing order in a memory connected to said server;
(g) establishing an index table for storing position data in said memory for each of said one or more presentation objects in said object table;
(h) enabling said client to generate a full view of said space;
(i) enabling said client to generate a detailed view of said space; and
(j) enabling said client to append an object to said object table of said database and/or enabling said client to read and/or edit any object in said object table of said database.
